# EUROPÄISCHE PATENTANMELDUNG

(11) **EP 1 655 156 A1**
(43) Veröffentlichungstag der Anmeldung: **10.05.2006**
(21) Anmeldenummer: 05024041.5
(22) Anmeldetag: 04.11.2005
(51) Int. Cl.: B60G 11/113, F16F 1/26

(54) **Befestigungssystem für eine Fahrzeugachse**

(30) Priorität: 09.11.2004 DE 102004053945
(71) Anmelder: DaimlerChrysler AG, 70567 Stuttgart (DE)
(72) Erfinder: Eibl, Markus, 71229 Leonberg (DE); Feeser, Martin, 73760 Ostfildern (DE)

(57) **Zusammenfassung**

Die vorliegende Erfindung betrifft ein System (1) zum Befestigen einer Fahrzeugachse (2) an einem federnden Längsträger (3) des Fahrzeugs, mit einer Federspannplatte (4), die an einer von der Fahrzeugachse (2) abgewandten Seite am Längsträge (3) angeordnet ist, mit zwei Federbügeln (6), die zwei zueinander parallele und über eine Basis (9) miteinander verbundene Schenkel (8) aufweisen, und mit einer Federgegenspannplatte (5), die an einer vom Längsträger (3) abgewandten Seite an der Fahrzeugachse (2) angeordnet ist. Dabei sind die beiden Federbügel (6) beiderseits der Fahrzeugachse (2) angeordnet, umgreifen jeweils den Längsträger (3), stützen sich jeweils mit ihrer Basis (9) an der Federspannplatte (4) ab und sind jeweils mit ihren Schenkeln (8) an der Federgegenspannplatte (5) befestigt.

Zur Reduzierung von Setzungserscheinungen weisen die beiden Federbügel (6) jeweils an ihrer Basis (9) eine zur Federspannplatte (4) hin konvex gekrümmte Kontur (11) auf, und die Federspannplatte (4) weist für jede Basis (9) einen Anlagebereich (13) auf, der beiderseits einer Zentralzone (14), in der ein Mittelabschnitt (12) der jeweiligen Basis (9) anliegt, eine zur Basis (9) hin konvex gekrümmte Hauptkontur (15) aufweist.

## Beschreibung

Die Erfindung betrifft ein System zum Befestigen einer Fahrzeugachse an einem federnden Längsträger des Fahrzeugs mit den Merkmalen des Oberbegriffs des Anspruchs 1.

Aus der DE 21 21 180 C3 ist ein Befestigungssystem der eingangs genannten Art bekannt, das mit einer Federspannplatte und mit zwei Federbügeln arbeitet. Die Federspannplatte ist im montierten Zustand an einer von der Fahrzeugachse abgewandten Seite am Längsträger angeordnet. Die beiden Federbügel weisen zwei über eine Basis miteinander verbundene Schenkel auf. Beim bekannten Befestigungssystem sind die Federbügel aus U-förmig gebogenen Stangen hergestellt. Im montierten Zustand sind die beiden Federbügel beiderseits des als Blattfederpaket ausgestalteten Längsträgers angeordnet und umgreifen jeweils die Fahrzeugachse, derart, dass sie sich jeweils mit ihrer Basis an der Fahrzeugachse abstützen und jeweils mit ihren Schenkeln an der Federspannplatte befestigt sind. Die Befestigung der Federbügel an der Federspannplatte erfolgt zweckmäßig mittels einer Verschraubung, bei der die freien Enden der Schenkel jeweils ein Gewinde tragen, durch in der Federspannplatte ausgebildete Durchgangsöffnungen durchgesteckt sind und an der von der Basis abgewandten Seite mit Muttern versehen sind.

Das gattungsgemäße Befestigungssystem arbeitet somit nicht mit einer direkten Befestigung der Fahrzeugachse am Längsträger, sondern mit einer Verspannung, welche die Fahrzeugachse vorgespannt am Längsträger festlegt.

Aufgrund von Herstellungstoleranzen kann es im Betrieb des Fahrzeugs zu Setzungserscheinungen kommen, die dazu führen, dass die Verspannung mehr oder weniger nachgibt. Um im Bereich des Befestigungssystems einen übermäßigen Verschleiß zu vermeiden, ist es daher erforderlich, das Befestigungssystem in zeitlichen Abständen zu warten, beispielsweise um die Verschraubung neu anzuziehen.

Die vorliegende Erfindung beschäftigt sich mit dem Problem, für ein System der eingangs genannten Art eine verbesserte oder zumindest eine andere Ausführungsform anzugeben, die sich insbesondere dadurch auszeichnet, dass Setzungserscheinungen reduziert sind.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, die beiden Federbügel jeweils an ihrer Basis mit einer Kontur auszustatten, die in Richtung der freien Enden der Schenkel konvex gekrümmt ist. Diese konvex gekrümmte Kontur besitzt zwangsläufig einen Scheitel oder einen Scheitelbereich, der eine Kontaktzone definiert, über welche der Federbügel in jedem Fall an einem dafür vorgesehenen Anlagebereich zur Anlage kommt. Des weiteren wird durch die konvex gekrümmte Kontur im Bereich der Basis eine Feder mit hoher Federsteifigkeit ausgebildet, die beim Verspannen eine elastische Verformung der Basis zulässt, wodurch insbesondere ein Toleranzausgleich möglich ist. Die Gefahr von Setzungserscheinungen im Betrieb des Fahrzeugs wird durch die verbesserte Kontaktierung und durch den verbesserten Toleranzausgleich reduziert.

Beim erfindungsgemäßen Befestigungssystem erfolgt die Montage der Federbügel außerdem so, dass diese im montierten Zustand beiderseits der Fahrzeugachse angeordnet sind, jeweils den Längsträger umgreifen, sich jeweils mit ihrer Basis an der Federspannplatte abstützen und jeweils mit ihren Schenkeln an einer Federgegenspannplatte befestigt sind, die an einer vom Längsträger abgewandten Seite an der Fahrzeugachse angeordnet ist. Die Abstützung der Federbügel über deren Basis erfolgt somit über die Federspannplatte an der Fahrzeugachse. Dementsprechend besitzt die Federspannplatte für jede Basis einen Anlagebereich, in dem sich der jeweilige Federbügel mit seiner Basis abstützt. Um hier eine günstige Kraftübertragung möglichst ohne Kraftspitzen erreichen zu können, sind die Anlagebereiche für die Kontaktierung mit der jeweiligen Basis jeweils so ausgestaltet, dass sie jeweils eine Zentralzone und beiderseits der Zentralzone eine zur Basis hin konvex gekrümmte Hauptkontur aufweisen. Durch die konvex gekrümmte Hauptkontur kann eine flächige Anlage zwischen Basis und Federspannplatte ohne Stufen und Kanten erreicht werden. Die Kraftübertragung erfolgt dadurch gleichmäßig oder stetig und im wesentlichen ohne schädliche Spannungsspitzen.

Gemäß einer besonders vorteilhaften Ausführungsform können die Zentralzonen der Anlagebereiche jeweils eine zur Basis hin konkav gekrümmte Zentralkontur aufweisen. Bei der Montage wirkt diese konkav gekrümmte Zentralkontur des jeweiligen Anlagebereichs mit der konvex gekrümmten Kontur der jeweiligen Basis zur Zentrierung des Federbügels an der Federspannplatte zusammen. Auf diese Weise nehmen die Federbügel bei ihrer Montage automatisch eine vorbestimmte Relativlage an der Federspannplatte ein, was die Gefahr von Setzungserscheinungen im Betrieb des Fahrzeugs reduziert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Seitenansicht auf ein Befestigungssystem nach der Erfindung im montierten Zustand,
- Fig. 2: eine vergrößerte Detailansicht auf einen Federbügel mit Federspannplatte in einem nicht montierten Zustand,
- Fig. 3: eine vergrößerte Detailansicht auf eine Federspannplatte.

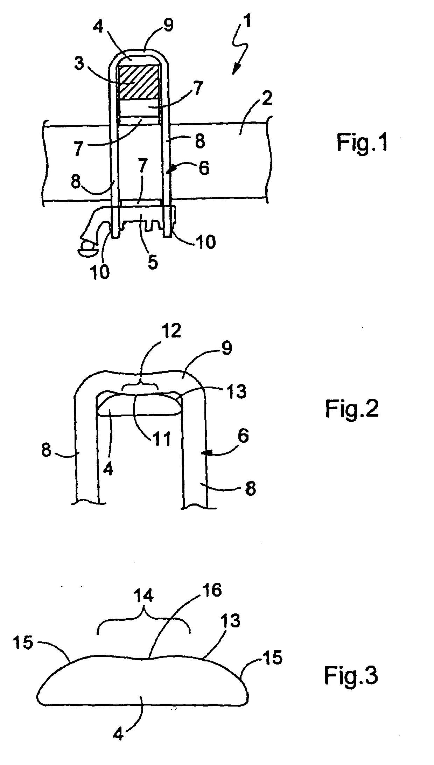

Entsprechend Fig. 1 dient ein erfindungsgemäßes System 1 zum Befestigen einer Fahrzeugachse 2 an einem federnden Längsträger 3 eines im übrigen nicht gezeigten Fahrzeugs. Beim Längsträger 3 handelt es sich beispielsweise um ein Blattfederpaket. Bei der Fahrzeugachse 2 handelt es sich zweckmäßig um eine Starrachse zur Lagerung von Rädern oder Radpaaren einer Achslinie des Fahrzeugs, das insbesondere ein Nutzfahrzeug sein kann. Zweckmäßig ist die Fahrzeugachse 2 an jeder Fahrzeugseite mit Hilfe eines derartigen Befestigungssystems 1 am jeweiligen linken bzw. rechten Längsträger 3 befestigt.

Das Befestigungssystem 1 umfasst eine Federspannplatte 4, eine Federgegenspannplatte 5 sowie zwei Federbügel 5, von denen in Fig. 1 nur der dem Betrachter zugewandte Federbügel 6 sichtbar ist. Der vom Betrachter abgewandte Federbügel 6 ist deckungsgleich hinter dem sichtbaren Federbügel 6 angeordnet und dementsprechend in der hier gezeigten Perspektive nicht erkennbar.

Im hier gezeigten montierten Zustand ist die Federspannplatte 4 am Längsträger 3 angeordnet, und zwar an einer von der Fahrzeugachse 2 abgewandten Seite. Im Unterschied dazu ist die Federgegenspannplatte 5 an der Fahrzeugachse 2 angeordnet, und zwar an einer vom Längsträger 3 abgewandten Seite. Dabei ist die Federgegenspannplatte 5 hier über ein Zwischenelement 7 an der Fahrzeugachse 2 abgestützt, während die Federspannplatte 4 hier direkt am Längsträger 3 abgestützt ist. Der Längsträger 3 ist über zwei weitere Zwischenelemente 7 an der Fahrzeugachse 2 abgestützt.

Jeder Federbügel 6 besitzt zwei Schenkel 8, die sich parallel zueinander erstrecken und die über eine gemeinsame Basis 9 miteinander verbunden sind. Im montierten Zustand gemäß Fig. 1 erfolgt die Anordnung der Federbügel 6 so, dass die beiden Federbügel 6 beiderseits der Fahrzeugachse 2 angeordnet sind, das heißt, der hier sichtbare Federbügel 6 erstreckt sich in Blickrichtung vor der Fahrzeugachse 2, während der andere, verdeckte Federbügel 6 hinter der Fahrzeugachse 2 angeordnet ist. Beide Federbügel 6 umgreifen jeweils den Längsträger 3, das heißt, der Längsträger 3 ist dann im Bereich der Basis 9 zwischen den Schenkeln 8 angeordnet. Des weiteren stützen sich die Federbügel 6 jeweils einenends mit ihrer Basis 9 an der Federspannplatte 4 ab. Anderenends sind die Federbügel 6 jeweils mit ihren Schenkeln 8 an der Federgegenspannplatte 5 befestigt. Zur Befestigung der Schenkel 8 an der Federgegenspannplatte 5 wird auch hier jeweils eine Verschraubung 10 bevorzugt, bei welcher die freien Enden der Schenkel 8 jeweils mit einem Außengewinde versehen sind, Durchgangsöffnungen, die in der Federgegenspannplatte 5 ausgebildet sind, durchsetzen und an einer von der Fahrzeugachse 2 abgewandten Seite eine nicht gezeigte Mutter tragen. Durch entsprechendes Anziehen der Muttern kann die gewünschte Verspannung zwischen Fahrzeugachse 2 und Längsträger 3 erreicht werden, wodurch Fahrzeugachse 2 und Längsträger 3 indirekt über das Befestigungssystem 1 aneinander festgelegt werden.

Während Fig. 1 den fertig montierten Zustand des Befestigungssystems 1 zeigt, ist in Fig. 2 ein Federbügel 6 im Bereich seiner Basis 9 wiedergegeben, und zwar in einem nicht montierten Zustand. Der Federbügel 6 nimmt dann eine unbelastete Ausgangsform ein, die erfindungsgemäß so ausgestaltet ist, dass der Federbügel 6 in oder an seiner Basis 9 eine zur Federspannplatte 4 hin konvex gekrümmte Kontur 11 aufweist. Diese konvex gekrümmte Kontur 11 führt dazu, dass der Federbügel 6 beim Montieren zunächst in einem Mittelabschnitt 12 seiner Basis 9 an der Federspannplatte 4 zur Anlage kommt. Zweckmäßig ist die konvex gekrümmte Kontur 11 symmetrisch ausgestaltet.

Die Federspannplatte 4 besitzt für die Kontaktierung der beiden Federbügel 6 jeweils einen Anlagebereich 13, in dem die jeweilige Basis 9 bei der Montage zur Anlage kommt.

Gemäß Fig. 3 ist in diesen Anlagebereichen 13 jeweils eine Zentralzone 14 angeordnet, die dem oben genannten Mittelabschnitt 12 der jeweiligen Basis 9 zugeordnet ist. Beiderseits dieser Zentralzone 14 ist der Anlagebereich 13 mit einer zur Basis 9 hin konvex gekrümmten Hauptkontur 15 ausgestattet. Zweckmäßig ist diese Hauptkontur 15 innerhalb des jeweiligen Anlagebereichs 13 symmetrisch ausgestaltet.

Bei der in Fig. 3 gezeigten besonderen Ausführungsform sind die Anlagebereiche 13 der Federspannplatte 4 in ihren Zentralzonen 14 jeweils mit einer zur Basis 9 hin konkav gekrümmten Zentralkontur 16 ausgestattet. Zweckmäßig ist die konkav gekrümmte Zentralkontur 16 jeweils symmetrisch innerhalb des zugehörigen Anlagebereichs 13 ausgestaltet.

Wie Fig. 3 entnehmbar ist, sind Zentralkontur 16 und Hauptkontur 15 zweckmäßig so ausgestaltet, dass die Zentralkontur 16 stetig in die Hauptkontur 15 übergeht, also ohne Stufen und Kanten.

Bei einer besonders vorteilhaften Ausführungsform kann eine Krümmung der Kontur 11 der Basis 9 komplementär zu einer Krümmung der Zentralkontur 16 des Anlagebereichs 13 geformt sein. Auf diese Weise ergibt sich eine besonders günstige Zentrierungswirkung. Ebenso kann es zweckmäßig sein, die Krümmung der Kontur 11 der Basis 9 stärker auszugestalten, also mit einem kleineren Krümmungsradius, als die Krümmung der Zentralkontur 16 des Anlagebereichs 13. Auf diese Weise wird ebenfalls die Zentrierung und Ausrichtung der Federbügel 6 relativ zur Federspannplatte 4 unterstützt.

Die Montage des Befestigungssystems 1 wird so durchgeführt, dass die Federbügel 6 jeweils zunächst im Mittelabschnitt 12 ihrer Basis 9 in der Zentralzone 14 des jeweiligen Anlagebereichs 13 zur Anlage kommen. Durch die konvexe Krümmung der Kontur 11 der Basis 9 und durch die konkave Zentralkontur 16 kommt es dabei zu einer vergleichsweise kleinflächigen und im Extremfall linien- oder punktförmigen Kontaktierung zwischen Federbügel 6 und Federspannplatte 4. Beim Verschrauben der Federbügel 6 mit der Federgegenspannplatte 5 wird eine Zugkraft in die Schenkel 8 der Federbügel 6 eingeleitet. Die Federbügel 6 werden beim Montieren so stark auf Zug belastet, dass sie sich im Bereich ihrer Basis 9 auch außerhalb der Zentralzone 14 am Anlagebereich 13 anlegen. Das heißt, beim Aufbringen der Zugkraft, also beim Anziehen der Verschraubung 10 wird die jeweilige Basis 9 entlang der Hauptkontur 15 des Anlagebereichs 13 abgerollt. Die Basis 9 bildet dadurch quasi eine Feder, die beim Anziehen der Verschraubung 10 gespannt wird und sich dabei elastisch verformt.

Vorzugsweise sind Federspannplatte 4 und Federbügel 6 so aufeinander abgestimmt, dass im fertig montierten Zustand die jeweilige Basis 9 am zugehörigen Anlagebereich 13 sowohl in der Zentralzone 14 als auch im wesentlichen vollständig entlang der Hauptkontur 15 anliegt. Dieser Zustand ist in Fig. 1 wiedergegeben. Auf diese Weise liegt der Federbügel 6 im Bereich seiner Basis 9 im wesentlichen vollflächig am zugehörigen Anlagebereich 13 der Federspannplatte 4 an, wodurch eine intensive Kraftübertragung zwischen Federbügel 6 und Federspannplatte 4 erreicht wird. Die stetige Konturgebung im jeweiligen Anlagebereich 13 sorgt dabei dafür, dass die Kraftübertragung im wesentlichen ohne Kraft- bzw. Spannungsspitzen erfolgt, so dass besonders große Zugkräfte bzw. Verspannungen realisierbar sind.

Durch die erfindungsgemäße Konturgebung, also die konvexe Kontur 11 der Basis 9, insbesondere in Verbindung mit der konkaven Zentralkontur 16, unterstützt bei der Montage des Befestigungssystems 1 das Auffinden optimaler Relativlagen der einzelnen Komponenten zueinander, wodurch die Gefahr von kritischen Setzungserscheinungen im Betrieb des Fahrzeugs reduziert ist. Dementsprechend funktioniert das erfindungsgemäßen Befestigungssystem 1 zuverlässig und benötigt weniger Wartung. Insbesondere kann es entbehrlich sein, die Verschraubungen 10 regelmäßig zu überprüfen und gegebenenfalls nachzuspannen.

Die Federbügel 6 sind jeweils durch Biegeverformung aus einem Stab hergestellt, der entlang seiner Länge ein konstantes Profil aufweist, zum Beispiel ein Kreisprofil. Auf diese Weise kann die Federwirkung im Bereich der Basis 9 besonders einfach realisiert werden. Gleichermaßen kann sich das Profil über die Länge der Federbügel 6 verändern, so dass beispielsweise der Profilquerschnitt auf die Belastung abstimmbar ist.

### Bezugszeichenliste

- 1: Befestigungssystem
- 2: Fahrzeugachse
- 3: Längsträger
- 4: Federspannplatte
- 5: Federgegenspannplatte
- 6: Federbügel
- 7: Zwischenelement
- 8: Schenkel
- 9: Basis
- 10: Verschraubung
- 11: konvex gekrümmte Kontur von 9
- 12: Mittelabschnitt von 9
- 13: Anlagebereich von 4
- 14: Zentralzone von 13
- 15: konvex gekrümmte Hauptkontur von 13
- 16: konkav gekrümmte Zentralkontur von 13

## Patentansprüche

1. System zum Befestigen einer Fahrzeugachse (2) an einem federnden Längsträger (3) des Fahrzeugs,
- mit einer Federspannplatte (4), die im montierten Zustand an einer von der Fahrzeugachse (2) abgewandten Seite am Längsträger (3) angeordnet ist,
- mit zwei Federbügeln (6), die jeweils zwei über eine Basis (9) miteinander verbundene Schenkel (8) aufweisen,
**dadurch gekennzeichnet,**
- **dass** eine Federgegenspannplatte (5) vorgesehen ist, die im montierten Zustand an einer vom Längsträger (3) abgewandten Seite an der Fahrzeugachse (2) angeordnet ist,
- **dass** die beiden Federbügel (6) im montierten Zustand beiderseits der Fahrzeugachse (2) angeordnet sind, jeweils den Längsträger (3) umgreifen, sich jeweils mit ihrer Basis (9) an der Federspannplatte (4) abstützen und jeweils mit ihren Schenkeln (8) an der Federgegenspannplatte (5) befestigt sind,
- **dass** die beiden Federbügel (6) jeweils an ihrer Basis (9) eine zur Federspannplatte (4) hin konvex gekrümmte Kontur (11) aufweisen,
- **dass** die Federspannplatte (4) für jede Basis (9) einen Anlagebereich (13) aufweist, der beiderseits einer Zentralzone (14), in der im montierten Zustand ein Mittelabschnitt (12) der jeweiligen Basis (9) anliegt, eine zur Basis (9) hin konvex gekrümmte Hauptkontur (15) aufweist.

2. Befestigungssystem nach Anspruch 1,
**dadurch gekennzeichnet,**
**dass** die Zentralzonen (14) der Anlagebereiche (13) jeweils eine zur Basis (9) hin konkav gekrümmte Zentralkontur (16) aufweisen.

3. Befestigungssystem nach Anspruch 2,
**dadurch gekennzeichnet,**
**dass** die Zentralkontur (16) des jeweiligen Anlagebereichs (13) stetig in dessen Hauptkontur (15) übergeht.

4. Befestigungssystem nach Anspruch 2 oder 3,
**dadurch gekennzeichnet,**
**dass** die Krümmung der Kontur (11) der Basis (9) komplementär zur Krümmung der Zentralkontur (16) des Anlagebereichs (13) geformt ist.

5. Befestigungssystem nach Anspruch 2 oder 3,
**dadurch gekennzeichnet,**
**dass** die Krümmung der Kontur (11) der Basis (9) stärker gekrümmt ist als die Krümmung der Zentralkontur (16) des Anlagebereichs (13).

6. Befestigungssystem nach einem der Ansprüche 1 bis 5,
**dadurch gekennzeichnet,**
**dass** die Federbügel (6) im montierten Zustand so stark auf Zug belastet sind, dass sie jeweils mit ihrer Basis (9) auch außerhalb der Zentralzone (14) am jeweiligen Anlagebereich (13) anliegen.

7. Befestigungssystem nach Anspruch 6,
**dadurch gekennzeichnet,**
**dass** die Federbügel (6) im montierten Zustand so stark auf Zug belastet sind, dass sie jeweils mit ihrer Basis (9) an der Zentralzone (14) und im wesentlichen vollständig an der Hauptkontur (15) am jeweiligen Anlagebereich (13) anliegen.

8. Befestigungssystem nach einem der Ansprüche 1 bis 7,
**dadurch gekennzeichnet,**
**dass** die Federbügel (6) jeweils aus einem Stab mit über seine Länge konstantem Profil durch Biegeverformung hergestellt sind.
